## Europäisches Patentamt

## European Patent Office

## Office européen des brevets

(19)

(11) Veröffentlichungsnummer: **0 277 112**
**B1**

(12) **EUROPÄISCHE PATENTSCHRIFT**

(45) Veröffentlichungstag der Patentschrift:
**25.04.90**

(51) Int. Cl.⁴: **C02F 1/48**

(21) Anmeldenummer: **88890019.8**

(22) Anmeldetag: **28.01.88**

(54) **Magnetischer Aufbereiter für Flüssigkeiten, insbesondere für Wasser.**

(30) Priorität: **30.01.87 AT 196/87**

(43) Veröffentlichungstag der Anmeldung:
**03.08.88 Patentblatt 88/31**

(45) Bekanntmachung des Hinweises auf die Patenterteilung:
**25.04.90 Patentblatt 90/17**

(84) Benannte Vertragsstaaten:
**BE CH DE FR IT LI**

(56) Entgegenhaltungen:
**EP-A- 0 195 934**
**DE-A- 3 436 355**
**US-A- 4 611 615**

(73) Patentinhaber: **Münzing, Jürgen, Köttlach 127,**
**A-2640 Gloggnitz(AT)**

(72) Erfinder: **Münzing, Jürgen, Köttlach 127,**
**A-2640 Gloggnitz(AT)**

(74) Vertreter: **Matschnig, Franz, Dipl.-Ing.,**
**Siebensterngasse 54 Postfach 452, A-1071 Wien(AT)**

ACTORUM AG

## Beschreibung

Die Erfindung bezieht sich auf einen magnetischen Aufbereiter für Flüssigkeiten, insbesondere für Wasser, mit einer rohrförmigen Durchflußkammer, die zumindest einen, in Abhängigkeit von der Durchflußmenge des Wassers oder einer Flüssigkeit beweglichen, im Strömungsweg des Wassers angeordneten Dauermagnet enthält.

Die Funktion magnetischer Wasseraufbereiter beruht darauf, daß beim Durchströmen des Wassers durch ein Magnetfeld die Ionen der im Wasser gelösten Härtesalze bzw. die Dipole des Wassers auf Grund der Lorentzkraft getrennt bzw. ausgerichtet werden. Hierdurch wird die Kristallbildung erschwert bzw. können vorhandene Ablagerungen erweicht und ausgeschwemmt werden. Es erfolgt demnach keine Entsalzung des Wassers sondern eine physikalische Änderung, die Ablagerungen, insbesondere Kalkablagerungen entgegenwirkt. Die Lorentzkraft, welche dem Vektorprodukt der Magnetfeldstärke und der Geschwindigkeit des strömenden Wassers proportional ist, muß eine bestimmte Mindestgröße aufweisen, um die gewünschten Effekte zu sichern. Neben ausreichender Feldstärke muß daher auch eine entsprechende Strömungsgeschwindigkeit gefordert werden und überdies eine bestimmte Verweildauer des Wassers im Magnetfeld.

Ein bekannter Wasseraufbereiter der eingangs genannten Art weist in einer rohrförmigen Durchflußkammer quadratischen Querschnitts einen feststehenden und einen beweglichen Magnet auf. Das Wasser soll durch den Luftspalt zwischen den beiden Magneten strömen. Bei größerer Strömungsmenge wird der bewegliche Magnet, der in Richtung des feststehenden Magneten federbelastet ist, gegen die Federkraft bewegt, sodaß der Spalt zwischen den Magneten vergrößert wird. Auf diese Weise soll auch bei niedrigen Durchflußmengen ein ausreichender Effekt auf das Wasser gewährleistet sein. Als nachteilig bei dem bekannten Wasseraufbereiter muß der verhältnismäßig kurze Weg des Wassers im Magnetfeld angesehen werden.

Wenn sich Eisenteilchen an den Magneten festsetzen, kann es vor allem durch Bildung magnetischer Nebenschlüsse zu einer erheblichen Schwächung des Magnetfeldes im Durchflußbereich des Wassers kommen. Auch ein Steckenbleiben des beweglichen Magneten führt zu einer unerwünschten Feldverringerung bei niedrigeren Durchflußmengen. Für den Benutzer sollten solche Störfälle ersichtlich sein, da eine mangelhafte Funktion des Wasseraufbereiters erst nach langer Zeit an Hand bereits irreversibler Kalkablagerungen feststellbar ist. Ein bekannt gewordener Wasseraufbereiter sieht im Bereich des feststehenden Magneten einen Reedschalter vor, der bei Absinken des Magnetfeldes unter einen bestimmten Wert seinen Schaltzustand ändert. Hiedurch ist es zwar möglich, das Auftreten z.B. starker Eisenspanablagerungen zu erkennen, ein Steckenbleiben des beweglichen Magneten wird jedoch nicht angezeigt.

Ein anderer, der EP-A 195 934 entnehmbarer magnetischer Wasseraufbereiter besteht aus einem äußeren Metallrohr und einem darin eingesetzten Kunststoffrohr. Innerhalb des Kunststoffrohres sind zwei oder mehrere Magnete feststehend eingesetzt. Das Wasser strömt durch das innere Kunststoffrohr bis zu den Magneten, verläßt dort durch Bohrungen dieses Rohr und strömt im Bereich der Magnete zwischen äußerem und innerem Rohr, um sodann wieder durch Bohrungen in das innere Rohr einzutreten. Dieser bekannte Wasseraufbereiter ermöglicht weder die Anpassung der Magnetisierung an die Wasserdurchflußmenge noch eine wirksame Funktionskontrolle.

Ein weiterer magnetischer Wasseraufbereiter gemäß der AT-PS 191.810 zeigt einen niedrigen, breiten Durchflußbehälter, in dem mehrere feststehende Magneteinsätze vorgesehen sind. Das Wasser soll dabei zwischen der oberen und unteren Wandung des Behälters und den Magneteinsätzen durchströmen. Eine Anpassung an die Durchflußmenge sowie die Anzeige von Funktionsstörungen ist bei dieser bekannten, offensichtlich für industrielle Zwecke gedachten Konstruktion nicht möglich.

Ziel der Erfindung ist die Schaffung eines magnetischen Flüssigkeitsaufbereiters kompakter Bauart, der sich auch für die Versorgung kleiner Objekte, wie Haushalte, Einfamilienhäuser etc. eignet, bei welchen starke Änderungen der Wasserdurchflußmenge vorliegen. Insbesondere soll bereits bei äußerst geringen Durchflußmengen der erwünschte Effekt sicher gestellt sein. Ein weiteres Ziel der Erfindung liegt in der Schaffung einer verläßlichen Funktionskontrolle des Wasseraufbereiters.

Diese Ziele lassen sich mit einem Aufbereiter der eingangs erwähnten Art erreichen, welcher erfindungsgemäß gekennzeichnet ist durch einen sich in Strömungsrichtung erweiternden Konusteil der Durchflußkammer und durch einen im wesentlichen konischen Magneteinsatz mit zumindest zwei platten- bzw. ringförmigen Dauermagneten die in axialem Abstand voneinander angeordnet sind, wobei der Magneteinsatz gegen die Strömungsrichtung mit einer Kraft, z.B. dem Eigengewicht und/oder der Kraft einer Feder beaufschlagt und im Bereich des Konusteiles axial verschieblich gelagert ist.

Der erfindungsgemäße Aufbereiter ermöglicht eine wirkungsvolle magnetische Wasserbehandlung über einen weiteren Durchflußbereich. Er kann kompakt ausgebildet und daher leicht in bestehende Wasserleitungen eingebaut werden. Die konstruktiven Merkmale führen auch zu einer hohen Zuverlässigkeit und Lebensdauer. Der Aufbereiter eignet sich aber auch für die Behandlung flüssiger Brennstoffe, wie Benzin, Dieselkraftstoff und Flüssiggas. Die magnetische Behandlung von Kraftstoffen führt zu einer besseren und saubereren Verbrennung in Motoren, wodurch sich ein geringerer Verbrauch, geringerer Schadstoffausstoß und ruhigerer Lauf des Motors ergeben. Der Wirkungsmechanismus ist noch nicht vollständig geklärt, er dürfte aber auch auf der Einwirkung der Lorenzkraft auf die Ionen bzw. auf einer Spinausrichtung beruhen.

Im Sinne eines guten Wirkungsgrades bei niedrigsten Durchflußmengen ist es zweckmäßig, wenn die radialen Abmessungen der Dauermagnete der Konizität des Magneteinsatzes im wesentlichen angepaßt sind.

Eine robuste Konstruktion ergibt sich, wenn die Dauermagnete durch Abstandhalter aus nicht ferromagnetischem Material, z.B. aus Kunststoff, voneinander getrennt sind. Hiebei können die Dauermagnete und die Abstandhalter auf einer zweiteiligen Steck- oder Schraubhülse mit Endflanschen zu dem Magneteinsatz zusammengefaßt sein.

Um einen gleichmäßigen Strömungsspalt für das Wasser zu erhalten ist der Magneteinsatz längs einer in der Kammerachse gelegenen Gleitstange verschieblich gelagert ist.

Um auch bei geringen Durchflußmengen hohe Strömungsgeschwindigkeiten zu erreichen, kann der Magneteinsatz bei Nullströmung im wesentlichen dichtend an der Innenwandung des Konusteils anliegen. Hiebei ist es empfehlenswert, wenn bei Nullströmung sämtliche Dauermagnete mit einer ihrer Umfangskanten die Innenwandung des Konusteils im wesentlichen berühren.

Zur guten Nutzung des Magnetfeldes können die Dauermagnete axial magnetisiert sein. Hiebei sind mit Vorteil benachbarte Dauermagnete einander mit gleichnamigen Polen zugewandt.

Um eine von der Lage des Wasseraufbereiters unabhängige Kraft auf den Magneteinsatz bei Vermeidung von Federn zu erhalten, ist es günstig, wenn zur Beaufschlagung des Magneteinsatzes mit einer Kraft gegen die Strömungsrichtung zumindest ein bezüglich der Kammerwandung ortsfester Dauermagnet vorgesehen ist, der magnetfeldmäßig zumindest einem der Dauermagnete des Magneteinsatzes zugeordnet ist. Eine zweckmäßige Weiterbildung ist in diesem Fall dadurch gekennzeichnet, daß der ortsfeste Dauermagnet dem in Strömungsrichtung gesehen letzten Dauermagnet des Magneteinsatzes in Abstand gegenüberliegt, wobei gleichnamige Pole einander zugekehrt sind.

Eine bezüglich der Herstellung und in Hinblick auf eine störungsfreie Funktion besonders günstige Ausbildung der Erfindung zeichnet sich dadurch aus, daß die Durchflußkammer Kreisquerschnitt aufweist und der Magneteinsatz im wesentlichen rotationssymmetrisch ausgebildet ist.

Eine zuverlässige Funktionsüberwachung wird dadurch ermöglicht, daß in bzw. an der Wandung des Konusteils der Durchflußkammer ein Magnetfeldsensor, z.B. ein Hallelement, Feldplatte od.dgl., angeordnet ist.

Hiebei ist es zweckmäßig, wenn in der Wandung des Konusteils eine Bohrung zur Aufnahme einer Tauchhülse ausgebildet ist, in welcher der Magnetfeldsensor angeordnet ist. Die Tauchhülse, eine Auswerteelektronik für den Magnetfeldsensor und eine Magnetfeldanzeige können zu einer baulichen Einheit zusammengefaßt sein, die an der Außenwandung des Wasseraufbereiters abnehmbar angeordnet ist.

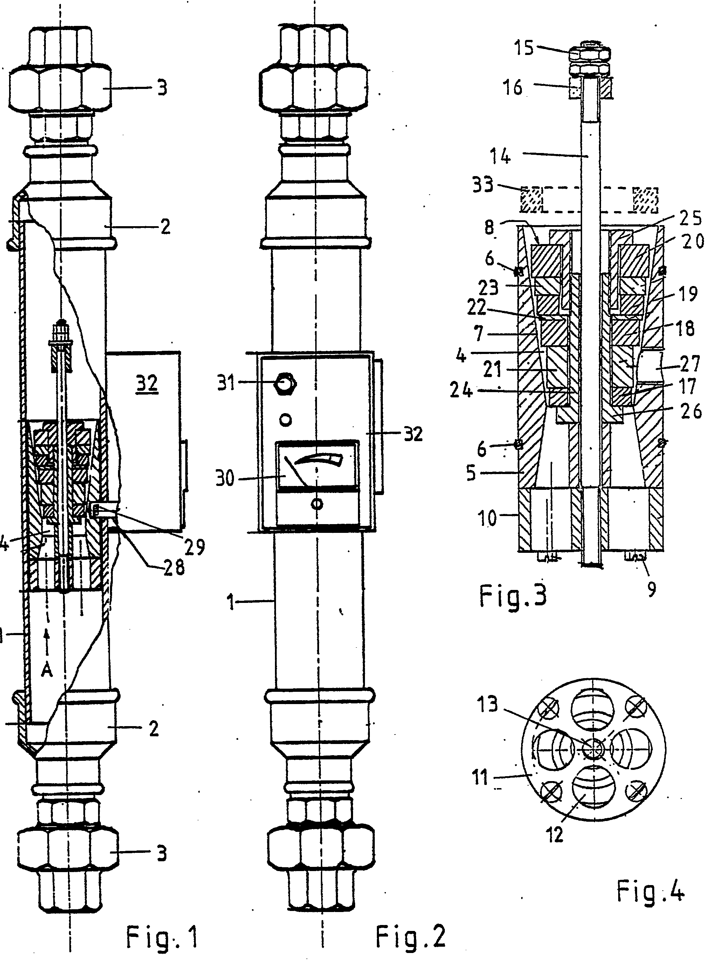

Die Erfindung samt ihren weiteren Vorteilen und Merkmalen ist im folgenden an Hand einer beispielsweisen Ausführungsform näher erläutert, die in der Zeichnung veranschaulicht ist. In dieser zeigen Fig. 1 eine Seitenansicht eines erfindungsgemäßen Wasseraufbereiters, teilweise geschnitten, Fig. 2 eine Ansicht in Richtung des Pfeiles II der Fig. 1, Fig. 3 die aus Fig. 1 ersichtliche Durchflußkammer samt Magneteinsatz in größerem Maßstab in einem Axialschnitt und Fig. 4 eine Ansicht in Richtung des Pfeiles IV der Fig. 3.

Gemäß Fig. 1 ist ein Rohrabschnitt 1 an beiden Enden mit Reduziermuffen 2 und mit Anschlußmuttern 3 versehen. Die Durchflußkammer 4 des Wasseraufbereiters ist bei diesem Ausführungsbeispiel von einem kurzen Rohrstück 5 gebildet, das unter Zuhilfenahme von Dichtringen 6 in den Rohrabschnitt 1 eingesetzt und in geeigneter Weise fixiert wird.

Wie besser aus Fig. 3 hervorgeht, weist die Durchflußkammer 4 einen Konusteil 7 auf, der in Durchflußrichtung A des Wassers erweitert ist. In dem Konusteil 7 der Durchflußkammer 4 ist ein konischer Magneteinsatz 8 axial verschieblich gelagert. Der Aufbau des Magneteinsatzes 8 und dessen Lagerung werden nachstehend näher beschrieben.

Die hier beschriebene Ausführungsform des Wasseraufbereiters wird, wie in der Zeichnung dargestellt, somit in vertikaler Lage, in eine Wasserleitung eingebaut. Das Wasser strömt hiebei von unten in Richtung des Pfeiles A nach oben. Im folgenden verwendete Begriffe "unten" und "oben" entsprechen somit sowohl der Zeichnung als auch den tatsächlichen Gegebenheiten.

An dem unteren Ende des Rohrstückes 5 ist, z.B. mittels Schrauben 9, ein Abschlußstück 10 befestigt, das gleichen Außendurchmesser wie das Rohrstück 5 aufweist und eine Bodenplatte 11 mit z.B. vier Wasserdurchflußbohrungen 12 und einer zentralen Gewindebohrung 13 besitzt. In die zentrale Bohrung 13 ist eine Gleitstange 14 eingeschraubt, die sich zentral nach oben, durch den Magneteinsatz 8 hindurch und darüber hinaus erstreckt. Am oberen Ende der Gleitstange 14 sind ein Anschlag 15, z.B. in Form zweier Muttern, und ein Dämpfungsring 16, z.B. aus Gummi, angeordnet.

Der Magneteinsatz 8 besteht aus vier ringförmigen, vorzugsweise einstückigen Dauermagneten 17, 18, 19, 20, zwischen denen ringförmige Abstandhalter 21, 22, 23 z.B. aus Kunststoff oder einem anderen nicht ferromagnetischem Material gelegen sind. Die Magnete 17, 18, 19, 20 sind axial magnetisiert, wobei gleichnamige Pole einander zugewandt sind. Die ringförmigen Magnete und die Abstandhalter sind von einer zweiteiligen Hülse 24 getragen und zusammengehalten, wobei der oberste bzw. unterste Magnet 20 bzw. 17 an einem Endflansch 25 bzw. 26 anliegt. Die beiden Teile der vorteilhafterweise aus Kunststoff hergestellten Hülse 24 sind z.B. zusammengeklebt oder miteinander verschraubt. Der Innendurchmesser der Hülse 24 ist etwas größer als der Durchmesser der Gleitstange 14, sodaß der Magneteinsatz 8 in axialer Richtung längs der Stange 14 ohne wesentliche Reibung verschiebbar ist.

Der Durchmesser der Magnete 17, 18, 19, 20 und der dazwischen liegenden Abstandhalter 21, 22, 23 nimmt entsprechend der Konizität des Konusteiles 7 von unten nach oben zu. In der gezeigten Ruhelage, entsprechend einer Wasserströmung "Null", sitzt der Magneteinsatz 8 zufolge seines Gewichtes im wesentlichen dichtend an der Innenwandung des Konusteils 7, wobei die jeweils unteren Umfangskanten der Magnete 17, 18, 19, 20 die Innenwandung des Konusteils 7 im wesentlichen berühren.

In der Wandung sowohl des Rohrabschnittes 1 als auch des Rohrstückes 5 ist eine Bohrung 27 ausgebildet, in die eine Tauchhülse 28 dichtend soweit eingeführt wird, daß ihr abgeschlossenes Stirnende mit der Innenwandung des Konusteils 7 im wesentlichen fluchtet. In der Tauchhülse sitzt ein Magnetfeldsensor 29, z.B. eine Feldplatte oder ein Hallelement, der über eine nicht dargestellte Auswerteelektronik mit einem Anzeigegerät 30 für die Feldstärke und/oder mit einer Kontrollampe 31 verbunden ist (Fig. 2). Die Tauchhülse 28 bildet mit der Auswerteelektronik und den Magnetfeldanzeigen 30, 31 eine bauliche Einheit 32, die an der Außenwandung des Aufbereiters abnehmbar angeordnet ist und auch die erforderlichen Batterien aufnimmt.

Wie bereits erwähnt, wirkt bei diesem Ausführungsbeispiel das Eigengewicht des Magneteinsatzes 8 als Kraft auf diesen, gegen die Strömungsrichtung A des Wassers. Es ist jedoch auch möglich, in hier nicht gezeigter Weise eine Feder zu verwenden, welche den Magneteinsatz 8 gegen die Strömungsrichtung A belastet. Oder es kann, dies ist in Fig. 3 strichliert angedeutet, ein bezüglich der Kammerwandung ortsfester Dauermagnet 33 vorgesehen sein, der dem Dauermagnet 20 des Magneteinsatzes 8 in Abstand gegenüberliegt, wobei gleichnamige Pole einander zugewandt sind, sodaß eine den Einsatz 8 gegen die Strömungsrichtung A drückende Kraft vorliegt. In diesem Fall und ebenso bei Verwendung einer Feder ist man nicht notwendigerweise auf einen vertikalen Einbau des Aufbereiters angewiesen.

Der erfindungsgemäße Aufbereiter arbeitet wie nachstehend beschrieben. Das zu behandelnde Wasser strömt von unten durch die Bohrungen 12 nach oben, wobei je nach Durchflußmenge der Magneteinsatz 8 mehr oder weniger hoch geschoben wird. Das Wasser strömt somit längs eines kegelförmigen Spaltes an den Magneten 17, 18, 19, 20 vorbei, wobei die unteren Umlaufkanten der Magnete eine Wirbelbildung begünstigen, die erwünscht ist. Es ist ersichtlich, daß bei kleineren Durchflußmengen der Durchflußspalt sehr eng ist, sodaß auch in diesem Fall die für die Wasserbehandlung erforderlichen hohen Strömungsgeschwindigkeiten erreicht werden. Durch die Verwendung mehrerer Magnete ergibt sich ein entsprechend langer Durchflußweg des Wassers im Magnetfeld und demnach eine genügend lange Verweilzeit.

An dem Anzeigegerät 30 der Einheit 32 läßt sich das Magnetfeld an einer vorgebbaren Stelle der Kammerwandung ablesen. Das bedeutet, daß einerseits das Ausmaß der Verschiebung des Magneteinsatzes 8 feststellbar ist und daß andererseits das Magnetfeld z.B. bei Nullströmung, d.h. bei an der Kammerwandung anliegendem Einsatz, auch über lange Zeiträume überprüfbar ist. Wenn z.B. eine Ansammlung von Eisenspänen an dem Magneteinsatz erfolgt, führt dies durch magnetische Nebenschlüsse zu einer Feldschwächung, die an dem Anzeigegerät 30 erkennbar ist, sodaß Abhilfe durch Reinigung des Einsatzes oder Austausch des Wasseraufbereiters geschaffen werden kann. Auch ein Steckenbleiben des Magneteinsatzes ist an dem Anzeigegerät 30 feststellbar. Mittels der Kontrollampe 31 kann beispielsweise ein Warnsignal gegeben werden, wenn das Magnetfeld unterhalb eines vorgegebenen Wertes absinkt.

Der erfindungsgemäße Aufbereiter zeigt dank seiner Konstruktionsmerkmale eine besonders gute Anpassung an sich auch stark ändernde Durchflußmengen. Entsprechend den jeweiligen Forderungen kann die Kraft, mit welcher der Magneteinsatz 8 gegen die Strömungsrichtung beaufschlagt wird, individuell gewählt werden, wobei durch entsprechende Auswahl an Federn, ortsfesten Magneten und des Gewichtes des Einsatzes praktisch jeder gewünschte Kraftverlauf, z.B. ein progressiver, erhältlich ist. Bei der Wahl der Werkstoffe wird man in Hinblick auf die geforderte Korrosionsfestigkeit und Nichtmagnetisierbarkeit nach Möglichkeit Kunststoffe bevorzugen. So können das Rohrstück 5, das Abschlußstück 10, die Gleitstange 14 und die Abstandhalter 21, 22, 23 aus Polyvinylchlorid hergestellt sein, die Magnete 17, 18, 19, 20 aus modernen Sinter- oder Pulvermagnet-Werkstoffen. Die Durchflußkammer 4 könnte auch ohne Verwendung eines Rohrstückes direkt in dem Rohrabschnitt 1 ausgebildet sein. Wiewohl die Verwendung der Gleitstange 14 in Hinblick auf die Sicherstellung eines rundherum gleichmäßigen Strömungsspaltes zweckmäßig ist, sind auch Ausführungsformen ohne Gleitstange möglich. Ebenso ist ein rotationssymmetrischer, im Querschnitt kreisförmiger Aufbau nicht unbedingt erforderlich, allerdings zu bevorzugen.

Wenngleich in der Beschreibung und den Patentansprüchen der Einfachheit halber von "Wasser" gesprochen wird, soll dies keine Einschränkung auf "Wasser" bedeuten. Vielmehr eignet sich der Aufbereiter nach der Erfindung auch für die Behandlung von Kraftstoffen, wie bereits weiter oben erwähnt wurde, ganz allgemein für die Behandlung aller Flüssigkeiten, die beim Durchfließen eines Magnetfeldes ihre Eigenschaften ändern.

## Patentansprüche

1. Magnetischer Aufbereiter für Flüssigkeiten, insbesondere für Wasser, mit einer rohrförmigen Durchflußkammer, die zumindest einen, in Abhängigkeit von der Durchflußmenge des Wassers oder einer Flüssigkeit beweglichen, im Strömungsweg des Wassers angeordneten Dauermagnet enthält, gekennzeichnet durch einen sich in Strömungsrichtung (A) erweiternden Konusteil (7) der Durchflußkammer (4) und durch einen im wesentlichen konischen Magneteinsatz (8) mit zumindest zwei platten- oder ringförmigen Dauermagneten (17, 18, 19, 20), die in axialem Abstand voneinander angeordnet sind, wobei der Magneteinsatz (8) gegen die Strömungsrichtung mit einer Kraft, vorzugsweise dem Eigengewicht und/oder der Kraft einer Feder beaufschlagt und im Bereich des Konusteiles (7) axial verschieblich gelagert ist.

2. Aufbereiter nach Anspruch 1, dadurch gekennzeichnet, daß die radialen Abmessungen der Dauermagnete (17, 18, 19, 20) der Konizität des Magneteinsatzes (8) im wesentlichen angepaßt ist.

3. Aufbereiter nach Anspruch 1 oder 2, dadurch gekennzeichnet, daß die Dauermagnete (17, 18, 19, 20) durch Abstandhalter (21, 22, 23) aus nicht ferromagnetischem Material, z.B. aus Kunststoff voneinander getrennt sind.

4. Aufbereiter nach Anspruch 3, dadurch gekennzeichnet, daß die Dauermagnete (17, 18, 19, 20) und die Abstandhalter (21, 22, 23) auf einer zweiteiligen Steck- oder Schraubhülse (24) mit Endflanschen (25, 26) zu dem Magneteinsatz (8) zusammengefaßt sind.

5. Aufbereiter nach einem der Ansprüche 1 bis 4, dadurch gekennzeichnet, daß der Magneteinsatz (8) längs einer in der Kammerachse gelegenen Gleitstange (14) verschieblich gelagert ist.

6. Aufbereiter nach einem der Ansprüche 1 bis 5, dadurch gekennzeichnet, daß der Magneteinsatz (8) bei Nullströmung im wesentlichen dichtend an der Innenwandung des Konusteils (7) anliegt.

7. Aufbereiter nach Anspruch 6, dadurch gekennzeichnet, daß bei Nullströmung sämtliche Dauermagnete (17, 18, 19, 20) mit einer ihrer Umfangskanten die Innenwandung des Konusteils (7) im wesentlichen berühren.

8. Aufbereiter nach einem der Ansprüche 1 bis 7, dadurch gekennzeichnet, daß die Dauermagnete (17, 18, 19, 20) axial magnetisiert sind.

9. Aufbereiter nach Anspruch 8, dadurch gekennzeichnet, daß benachbarte Dauermagnete (17, 18, 19, 20) einander mit gleichnamigen Polen zugewandt sind.

10. Aufbereiter nach einem der Ansprüche 1 bis 9, dadurch gekennzeichnet, daß zur Beaufschlagung des Magneteinsatzes (8) mit einer Kraft gegen die Strömungsrichtung zumindest ein bezüglich der Kammerwandung ortsfester Dauermagnet (33) vorgesehen ist, der magnetfeldmäßig zumindest einem der Dauermagnete (20) des Magneteinsatzes (8) zugeordnet ist.

11. Aufbereiter nach Anspruch 10, dadurch gekennzeichnet, daß der ortsfeste Dauermagnet (33) dem in Strömungsrichtung (A) gesehenen letzten Dauermagnet (20) des Magneteinsatzes (8) in Abstand gegenüberliegt, wobei gleichnamige Pole einander zugekehrt sind.

12. Aufbereiter nach einem der Ansprüche 1 bis 11, dadurch gekennzeichnet, daß die Durchflußkammer (4) Kreisquerschnitt aufweist und der Magneteinsatz (8) im wesentlichen rotationssymmetrisch ausgebildet ist.

13. Aufbereiter nach einem der Ansprüche 1 bis 12, dadurch gekennzeichnet, daß in oder an der Wandung des Konusteils (7) der Durchflußkammer (4) ein Magnetfeldsensor (29), vorzugsweise ein Hallelement oder Feldplatte angeordnet ist.

14. Aufbereiter nach Anspruch 13, dadurch gekennzeichnet, daß in der Wandung des Konusteils (7) eine Bohrung (27) zur Aufnahme einer Tauchhülse (28) ausgebildet ist, in welcher der Magnetfeldsensor (29) angeordnet ist.

15. Aufbereiter nach Anspruch 14, dadurch gekennzeichnet, daß die Tauchhülse (28), eine Auswerteelektronik für die Magnetfeldsensor und eine Magnetfeldanzeige (30, 31) zu einer baulichen Einheit (32) zusammengefaßt sind, die an der Außenwandung des Wasseraufbereiters abnehmbar angeordnet ist.

**Claims**

1. A magnetic treatment device for liquids, especially for water, comprising a tubular flow chamber containing at least one permanent magnet which is movable in dependence on the rate of flow of the water or liquid and which is positioned in the flow path of the water, characterized by a conical portion (7) of the flow chamber (4) enlarging in the direction of flow (A) and by a substantially conical magnetic insert (8) comprising at least two plate or ring-shaped permanent magnets (17, 18, 19, 20) which are positioned at an axial distance from each other, a force, preferably its own weight and/or the force of a spring acting on the magnetic insert (8) against the direction of flow and said magnetic insert (8) being supported axially slidably in the area of the conical portion (7).

2. The treatment device according to claim 1, characterized in that the radial dimensions of the permanent magnets (17, 18, 19, 20) are substantially adapted to the conicity of the magnetic insert (8).

3. The treatment device according to claim 1 or 2, characterized in that the permanent magnets (17, 18, 19, 20) are separated from each other by spacers (21, 22, 23) of non-ferromagnetic material, e.g. plastic.

4. The treatment device according to claim 3, characterized in that the permanent magnets (17, 18, 19, 20) and the spacers (21, 22, 23) are combined on a two-piece plug or screw sleeve (24) with end flanges (25, 26) to form the magnetic insert (8).

5. The treatment device according to one of the claims 1 to 4, characterized in that the magnetic insert (8) is supported so as to be slidable along a sliding rod (14) extending in the axis of the chamber.

6. The treatment device according to one of the claims 1 to 5, characterized in that the magnetic insert (8) is in substantially sealing contact with the interior wall of the conical portion (7) during zero flow.

7. The treatment device according to claim 6, characterized in that during zero flow all permanent magnets (17, 18, 19, 20) substantially touch the interior wall of the conical portion (7) with one of their circumferential edges.

8. The treatment device according to one of the claims 1 to 7, characterized in that the permanent magnets (17, 18, 19, 20) are axially magnetised.

9. The treatment device according to claim 8, characterized in that adjacent permanent magnets (17, 18, 19, 20) face each other with like poles.

10. The treatment device according to one of the claims 1 to 9, characterized in that for a force to act on the magnetic insert (8) against the direction of flow at least one permanent magnet (33) which is stationary with respect to the wall of the chamber is provided, said permanent magnet (33) being assigned, as regards its magnetic field, to at least one of the permanent magnets (20) of the magnetic insert (8).

11. The treatment device according to claim 10, characterized in that the stationary permanent magnet (33) lies opposite and at a distance from the last permanent magnet (20) of the magnetic insert (8) seen in the direction of flow (A), with like poles facing each other.

12. The treatment device according to one of the claims 1 to 11, characterized in that the flow chamber (4) has a circular cross section and that the magnetic insert (8) is substantially rotationally symmetrical.

13. The treatment device according to one of the claims 1 to 12, characterized in that a magnetic field sensor (29), preferably a Hall element or a magnetoresistor, is positioned in or on the wall of the conical portion (7) of the flow chamber (4).

14. The treatment device according to claim 13, characterized in that a borehole (27) for receiving a sleeve closed at one end (28) is provided in the wall of the conical portion (7) in which the magnetic field sensor (29) is positioned.

15. The treatment device according to claim 14, characterized in that the sleeve (28) closed at one end, an electronic evaluating circuit for the magnetic field sensor and a magnetic field indicator (30, 31) are combined to form one structural unit (32) which is detachably positioned on the outer wall of the water treatment device.

## Revendications

1. Dispositif pour le traitement magnétique des liquides, notamment de l'eau, comportant une chambre de passage tubulaire qui contient au moins un aimant permanent placé sur le trajet d'écoulement de l'eau, mobile en fonction du débit de l'eau ou d'un liquide, caractérisé par une partie conique (7) de la chambre de passage (4) s'élargissant dans le sens d'écoulement (A) et par un ensemble d'aimants inséré (8) sensiblement conique comportant au moins deux aimants permanents plats ou annulaires (17, 18, 19, 20), qui sont disposés à distance axiale mutuelle, l'ensemble d'aimants inséré (8) étant sollicité contre le sens d'écoulement par une force, de préférence le poids propre et/ou la force d'un ressort et étant placé de façon à être mobile axialement dans la zone de la partie conique (7).

2. Dispositif de traitement selon la revendication 1, caractérisé en ce que les dimensions radiales des aimants permanents (17, 18, 19, 20) sont sensiblement adaptées à la conicité de l'ensemble d'aimants (8).

3. Dispositif de traitement selon la revendication 1 ou 2, caractérisé en ce que les aimants permanents (17, 18, 19, 20) sont séparés les uns des autres par des écarteurs (21, 22, 23) en matière non ferromagnétique, par exemple en matière plastique.

4. Dispositif selon la revendication 3, caractérisé en ce que les aimants permanents (17, 18, 19, 20) et les écarteurs (21, 22, 23) sont assemblés en l'ensemble d'aimants inséré (8) sur une douille de réception ou de vissage (24) comportant des brides terminales (25, 26).

5. Dispositif de traitement selon l'une des revendications 1 à 4, caractérisé en ce que l'ensemble d'aimants inséré (8) est placé de façon à pouvoir se déplacer le long d'une barre de glissement (14) placée sur l'axe de la chambre.

6. Dispositif de traitement selon l'une des revendications 1 à 5, caractérisé en ce que l'ensemble d'aimants inséré (8) est en contact sensiblement étanche avec la paroi intérieure de la partie conique (7), en cas d'écoulement nul.

7. Dispositif de traitement selon la revendication 6, caractérisé en ce qu'en cas d'écoulement nul, tous les aimants permanents (17, 18, 19, 20) sont pratiquement en contact par l'une de leurs arêtes périphériques, la paroi intérieure de la partie conique.

8. Dispositif de traitement selon l'une des revendications 1 à 7, caractérisé en ce que les aimants permanents (17, 18, 19, 20) sont aimantés axialement.

9. Dispositif de traitement selon la revendication 8, caractérisé en ce que des aimants permanents voisins (17, 18, 19, 20) sont en regard par des pôles de même nom.

10. Dispositif de traitement selon l'une des revendications 1 à 9, caractérisé en ce que pour appliquer à l'ensemble d'aimants (8) une force en sens opposé au sens d'écoulement, on prévoit au moins un aimant permanent (33) fixe par rapport à la paroi de la chambre, qui est rattaché en ce qui concerne le champ magnétique, à l'un au moins des aimants permanents (20) de l'ensemble d'aimants inséré (8).

11. Dispositif de traitement selon la revendication 10, caractérisé en ce que l'aimant permanent fixe (33) est placé à distance en face du dernier aimant permanent (20) de l'ensemble d'aimants inséré (8) lorsqu'on observe dans les sens d'écoulement (A), des pôles de même nom étant en regard.

12. Dispositif de traitement selon l'une des revendications 1 à 11, caractérisé en ce que la chambre de passage (4) présente une section droite circulaire et l'ensemble d'aimants inséré (8) présente sensiblement une symétrie de révolution.

13. Dispositif de traitement selon l'une des revendications 1 à 12, caractérisé en ce qu'un capteur de champ magnétique (29), de préférence un élément à effet Hall ou une magnétorésistance, est placé dans ou sur la paroi de la partie conique (7) de la chambre de passage (4).

14. Dispositif de traitement selon la revendication 13, caractérisé en ce qu'est formé dans la paroi de la partie conique (7) un alésage (27) pour la réception d'une douille noyée (28) dans laquelle est placé le capteur de champ magnétique (29).

15. Dispositif de traitement selon la revendication 14, caractérisé en ce que la douille noyée (28), un système électronique de traitement pour le capteur de champ magnétique et un indicateur de champ magnétique (30, 31) sont rassemblés en une unité modulaire (32), laquelle est placée de façon amovible sur la paroi extérieure du dispositif de traitement de l'eau.

Fig.1

Fig.2

Fig.3

Fig.4